Europäisches Patentamt

European Patent Office

Office européen des brevets

(11) Publication number: **0 128 535 B1**

# EUROPEAN PATENT SPECIFICATION

(45) Date of publication of patent specification: **23.10.91**

(21) Application number: **84106508.9**

(22) Date of filing: **07.06.84**

(51) Int. Cl.⁵: **G06K 7/08**, G07F 7/08, G07F 7/02

(54) Value-rated magnetic card writing and reading system, particularly for public telephony.

(30) Priority: **14.06.83 IT 6765483**

(43) Date of publication of application:
**19.12.84 Bulletin 84/51**

(45) Publication of the grant of the patent:
**23.10.91 Bulletin 91/43**

(84) Designated Contracting States:
**BE CH DE FR GB LI**

(56) References cited:
**FR-A- 2 072 203**
**GB-A- 2 041 611**

(73) Proprietor: **URMET S.p.A. Costruzioni Elettro-Telefoniche**
**Via Bologna 188/C**
**I-10154 Torino(IT)**

(72) Inventor: **Mondardini, Massimo**
**Via Mazzini 40**
**I-10123 Torino(IT)**

(74) Representative: **Modiano, Guido et al**
**MODIANO, JOSIF, PISANTY & STAUB**
**Modiano & Associati Via Meravigli, 16**
**I-20123 Milano(IT)**

## Description

This invention relates to a method of writing/reading value-rated magnetic cards, in particular but not exclusively for public telephony.

As is known, to enable public telephone sets, coins and/or tokens only have been used in the past, although a prevailing trend favors today the use of enabling cards the adoption whereof has been dictated by the capabilities of current automatic telephony systems which afford direct dialing even from public terminals. The enable card systems proposed and utilized heretofore may be divided into two main classes: "credit card" systems and "debit card" systems. Credit card systems utilize cards containing card identification data, data for activating counter units to count rate increments, and data for periodically issuing invoices covering such counts. The systems of the second type utilize instead value-rated cards containing a preset number of rate units adapted for count down, this number determining the card face value. As for the nature of the cards, the choice is presently restricted to some basic types: holographic cards, magnetic support cards, and electronic cards.

This disclosure makes reference to public telephony systems using enable cards of the second type, and specifically magnetic support cards. Thus, the word "card" will be used for "debit card" hereinafter, and designates a magnetic support value-rated card containing decrement rate units. Furthermore, while the invention is described in connection with public telephony systems, it may be appreciated that it can also be applied to other fields which make use of apparatus to be activated by means of value-rated cards. The main objection to a widespread use of card systems comes from the problem of forgery, which in the instance of value-rated cards is aggravated by the commercial value of the cards. The forgery problem may be fought at two levels, respectively a peripheral one and central one. At the peripheral level, "prima facie" recognition of the card validity is demanded to the reader associated with the telephone set, by providing the card with recognition data which may be coded. At the central level, a consistency check is effected on additional recognition data, typical of each card, which are interrelated univocally and not in accordance with preset criteria and decoded by specially set up central logic units. The card, moreover, is compared to a "list" of voided cards progressively stored in a so-called "blacklist".

To avoid excessive burdening of the central checking devices, this invention is essentially directed to provide a method for peripheral checking, which is particularly efficient and based on the principle of recording on the debit card some form of a "watermark" which cannot be duplicated at a low cost but is quite readable by systems using conventional means and techniques. The object thus pursued is that of preventing the use of peripherally installed readers -- which may be easily stolen or duplicated -- as a means of directly counterfeiting the cards or means apt to provide the constructional details of the recording members and related operation.

Another important object of this invention is to provide a card recognition method at peripheral level, employing a simple recognition procedure which uses, as informational units, the same informational units as are used at central level, processed in conformity with a code that cannot be reproduced with ordinary means. This promotes a simplification of the system as a whole and particularly of the electronics of the reader and validation means at peripheral level.

A further important object of this invention is that of exemplifying the card whose structure is reduced to a mere cardboard piece, which may be flexible, having associated therewith the magnetic support which is formed by coated oxides or tape in conformity with conventional economically advantageous procedures.

According to this invention these and other objects, such as will be apparent from the detailed description which follow, are accomplished by a method for writing/reading value-rated magnetic cards, in particular for public telephony as defined in claim 1. More particularly, the method comprises, for recording purposes, the use of a magnetic head having at least three windings for recording on at least three tracks -- strictly separated magnetically but perfectly adjacent, adjoining, and with the same length -- two coded signals, one of which is shared by the two side tracks; the signals, preferably push-pull signals, being recorded with strictly common synchronism on all the tracks; and, for reading purposes, the use of a conventional head, having a single winding, which fully encircles the center track and the side ones over half of the respective widths; the output signal from the readout head being the resultant of the algebraic sum of the readouts the marking form whereof, strictly dependent on the recording precision, constitutes the recognition and validation code. It will be readily understood how even a limited shift in the synchronism (clock) of the signal recorded on one track relatively to that recorded on the remaining ones, or cross-over of the signals between the tracks, will alter the algebraic sum provided by the readout head with consequent considerable alteration in the shape of the readout resultant and consequent rejection of the cad. This restricts recording to the use of a very high technological contents head which can record simultaneously on the three tracks with total absence of cross-over and strict observation of synchronism. On the other hand, the approach consisting of linking one half only of the side track magnetic flux (carrying the same recorded signal) during the readout step makes the structure of the related reader little restrictive, particularly as regards centering of the head with respect to the tracks, because any reduction in the width actually read of a side track is accommodated by a corresponding increase in the other, thereby the signal resulting from the sum of the two readouts does not change.

The invention will be better understood from the detailed description which follows and by making reference to the accompanying drawings, given herein by way of example and not of limitation, and where:

Figure 1 is a schematic view of the recording device and of the trace recorded on three adjacent and contiguous tracks in an exemplary elementar embodiment wherein the recording contains no informational data;

Figure 2 is a schematic view showing the readout device, its positioning with respect to the recorded track, and the resulting readout form;

Figure 3 is a diagram showing a data write example in binary form; and

Figure 4 is the form of the readout resultant of the trace of Figure 3.

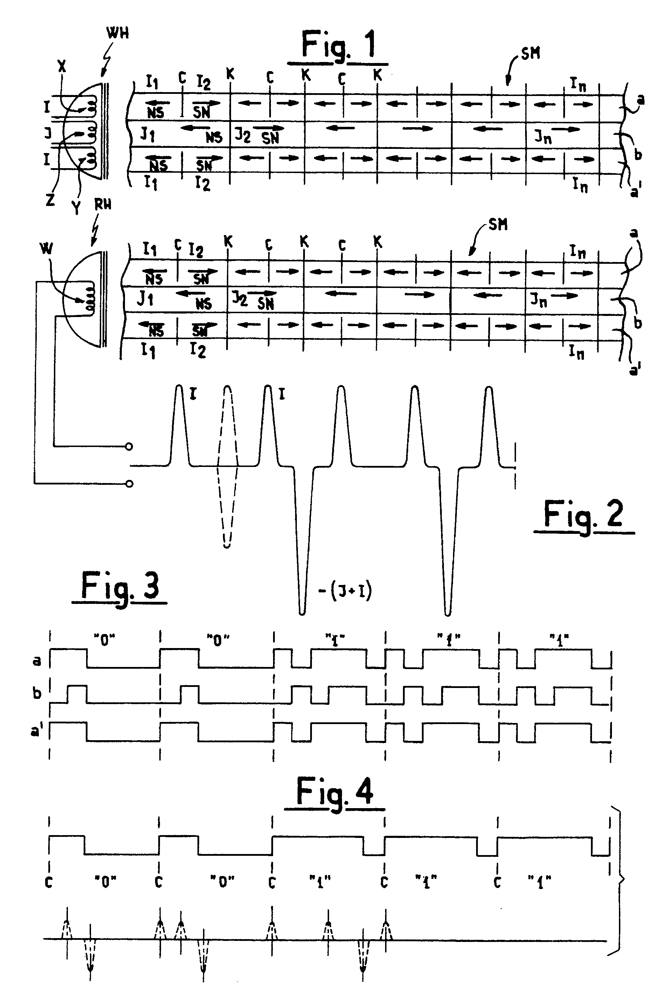

Making initial reference to Figures 1 and 2, indicated at WH is a write or recording magnetic head comprising on a single magnetic core at least three identical windings X,Z,Y which, when suitably energized, record corresponding magnetic signals on as many tracks a-b-a' with equal width on the magnetic support SM.

For convenience of illustration, signals of the numeric type and with constant strength will be assumed, characterized only by the polar orientation of the elemental dipoles brought out by the arrows in the figure; the polarity NS being represented by a vector pointing to left, the polarity SN by a vector pointing to right; the absolute value of the vector being representative of the constant strength of the magnetic field.

The recording head WH is fabricated to close tolerance to ensure a neat separation of the tracks for the magnetic effects and hence total absence of cross-over between the tracks. On the side windings X,Y, a common signal is supplied which comprises an identical sequence of current pulses $I_1...I_n$ of alternately opposed polarity which are scanned by a synchronism (clock) C which is strictly shared. On the center winding, a differentiated signal is supplied comprising, for example, a sequence of current pulses $J_1...J_n$ of alternately opposed polarity and different from the former.

At the clock points K, polarity reversal occurs in perfect synchronism on all of the three tracks. The magnetic support SM is associated with the debit card which is introduced into the validation device provided in the public set. That validation device comprises a conventional magnetic readout head RH, with a single winding W, which is sized to encircle the center track b completely and to encircle the side ones a-a' over half their width; thus, the winding W links the entire flux of the center track and one half the flux of each side track.

This permits, as outlined above, any misalignment of the head RH from the magnetic trace to be accommodated.

In fact, if the misaligned head RH encircles, for example, one portion of the track a beyond the center-line, the increase in the respective linking flux is compensated for by a corresponding decrease in the linking flux on the track a'. The head RH reads the three tracks simultaneously. Thus, some signals cancel out and other add together to yield a readout resultant which comprises the algebraic sum of the halved signals of the side tracks and full signal of the center track.

That resultant is shown, in analog form, in the diagram of Figure 2 and forms the card recognition and validation code. It may be appreciated from said diagram that the marking form or shape of the resultant signal is strictly dependent on the precision of the clocks C and K and on the total absence of cross-over between the tracks, which circumstances are, in turn, strictly dependent on the close tolerances of the write head.

In fact, in the elementar instance exemplified, the shape of the coded signal, included between two clock points "K" is represented by a pulse I resulting from the sum of the half-signals of the two side tracks, a successive pulse $-(J+I)$ resulting from the sum of the signals on the three tracks, and again by a pulse I. It will be appreciated that even a slight shift in the clocks C and/or K of one or more tracks can deeply alter the shape of the readout resultant, thereby said shape is made unrecognizable by the electronics associated with the reader, which will issue a reject command.

Like signal shape alterations are produced by a possible cross-over between the tracks, in particular at the clock points, whereat the readout resultant cancels out. Thus, a sort of "watermark" is provided which cannot be duplicated with ordinarily known magnetic recording means. It should be noted that the aforesaid write procedures involve no special techniques in the manufacture of the magnetic support, which may be obtained in the usual manner, possibly by coating oxides over a generic carrier means, e.g. a simple cardboard piece. The readout resultant appearing in analog form across the head RH may be rewritten in digital form, e.g. by binary coding and contain a generic information which may and may not be transmitted to the central recognition system, such as numeric data concerning the serial number of the card or data consistent therewith. With these procedures it is also possible to record the trace of the rate units subject to down counting.

Figure 3 shows one example of coded write-in relating to an information item composed of five bits, of which two at "0" level and three at "1" level (push-pull signals). The first and third tracks contain the information, the center track the coding and clock procedure. The diagram of Figure 4 shows the readout resultant in digital form. Shown in ghost lines on that same diagram is the analog form of the readout resultant, i.e. the voltage pulses across the readout head, used to drive the digital circuits.

## Claims

1. A method of security marking and verifying value rated magnetic strip cards, in which the security marking step comprises

   i) synchronously recording with high precision on the magnetic strip the same signal on at least two parallel side tracks (a,a') that are separated by a center track (b), on which center track (b) a different signal is recorded simultaneously and strictly synchronously with the signal on the side tracks, thus aligning the magnetic flux transitions of the signals orthogonally across all tracks written onto the magnetic strip, and in which the verification step comprises
   ii) simultaneously reading said tracks by means of a read head (RH) passing over the whole center track (b) and half of the combined width of said side tracks (a,a'), thus providing a resultant signal being the sum of the signals of said tracks, whose shape strictly depends on the mutual alignment of the recorded signals and which constitutes security mark.

2. The method according to claim 1 characterized in that said security marking step is performed by a recording magnetic head (WH) having three windings (x,y,z) for recording on three corresponding tracks (a,b,a') two signals, one whereof being shared by the side tracks (a,a'), said three tracks (a,a',b) being strictly separated magnetically but being perfectly adjacent, contiguous, and with the same width, said signals being recorded so as to preserve, on all tracks, alignment in the direction of writing for polarity reversals, and in that said verification step is performed by said read head (RH) having a single winding (W), which fully extends over said center track (b) and over half of the combined extension of said side tracks (a,a'), said read head (RH) outputting a signal which is the resultant of the algebraic sum of the track readouts whose marking form, strictly dependent on the recording precision, constitutes a recognition and validation code.

3. The method according to any one of the preceding claims, characterized in that said security marking step and said verification step are performed on said tracks (a,b,a') of said magnetic strip, wherein said magnetic strip is of a conventional type, e.g. formed by coating oxide over a generic substrate of cardboard or the like.

4. The method according to any one of the preceding claims, characterized in that the informations recorded on said side tracks (a,a') and said center track (b) are in digital form.

5. The method according to any one of the preceding claims, characterized in that the security marking step is performed by said recording magnetic head (WH) by generation of a magnetic flux of equal strength on each said windings (x,y,z), and in that the flux read on said side tracks (a, a') during said verification step is constant and independent from the strict centering of the read head (RH) relatively to said magnetic strip

## Revendications

1. Procédé de marquage de sécurité et de vérification de cartes à bande magnétique à prépaiement, dans lequel l'étape de marquage de sécurité comporte:

   i) l'enregistrement de façon synchrone avec une précision élevée sur la bande magnétique du même signal sur au moins deux pistes latérales parallèles (a,a') qui sont séparées par une piste centrale (b), sur laquelle piste centrale (b) est enregistré simultanément un signal différent et de façon rigoureusement synchrone au signal sur les pistes latérales, en alignant ainsi les transitions de flux magnétique des signaux orthogonalement sur toutes les pistes écrites sur la bande magnétique, et dans lequel l'étape de vérification comporte
   ii) la lecture simultanée desdites pistes à l'aide d'une tête de lecture (RH) passant sur la totalité de la piste centrale (b) et la moitié de la largeur combinée desdites pistes latérales (a,a'), délivrant ainsi un signal résultant qui est la somme des signaux desdites pistes, dont la forme dépend rigoureusement de l'alignement mutuel des signaux enregistrés et qui constitue le marquage de sécurité.

2. Procédé selon la revendication 1, caractérisé en ce que ladite étape de marquage de sécurité est effectuée à l'aide d'une tête magnétique d'enregistrement (WH) possédant trois enroulements (x,y,z) afin d'enregistrer sur trois pistes correspondantes (a,b,a') deux signaux, dont l'un est partagé par les pistes latérales (a,a'), lesdites trois pistes (a,a',b) étant rigoureusement séparées magnétiquement mais étant parfaitement adjacentes, contiguës et de même largeur, lesdits signaux étant enregistrés de manière à préserver, sur toutes les pistes, l'alignement,dans le sens d'écriture,des inversions de polarité, et en ce que ladite étape de vérification est effectuée à l'aide de ladite tête de lecture (RH) possédant un unique enroulement (W), qui s'étend en totalité sur ladite piste centrale (b) et sur la moitié de la largeur combinée desdites pistes latérales (a,a'), ladite tête de lecture (RH) délivrant un signal qui est le résultat de la somme algébrique des lectures de piste dont la forme de marquage , rigoureusement fonction de la précision d'enregistrement, constitue un code de reconnaissance et de validation.

3. Procédé selon l'une quelconque des revendications précédentes, caractérisé en ce que ladite étape de marquage de sécurité et ladite étape de vérification sont effectuées sur lesdites pistes (a,b,a') de ladite bande magnétique, dans lequel ladite bande magnétique est de type classique, par exemple formée par revêtement d'oxyde d'un substrat générique de carton ou analogue.

4. Procédé selon l'une quelconque des revendications précédentes, caractérisé en ce que les informations enregistrées sur lesdites pistes latérales (a,a') et ladite piste centrale (b) sont sous forme numérique.

5. Procédé selon l'une quelconque des revendications précédentes, caractérisé en ce que l'étape de marquage de sécurité est effectuée par ladite tête d'enregistrement (WH) par production d'un flux magnétique d'intensité égale sur chacun desdits enroulements (x;y,z), et en ce que le flux lu sur lesdites pistes latérales (a,a') durant ladite étape de vérification est constant et indépendant du centrage rigoureux de la tête de lecture (RH) par rapport à ladite bande magnétique.

**Patentansprüche**

1. Verfahren zur Sicherheits-Markierung und Verifizierung von im voraus bezahlten Magnetstreifen-Karten, bei dem der Verfahrensschritt der Sicherheitsmarkierung umfaßt:
   i) mit hoher Präzision wird auf dem Magnetstreifen das gleiche Signal synchron auf mindestens zwei parallele Seitenspuren (a, a') aufgezeichnet, die von einer mittleren Spur (b) getrennt sind, wobei auf dieser mittleren Spur (b) ein unterschiedliches Signal simultan und strikt synchron mit dem Signal auf den Seitenspuren aufgezeichnet wird, wodurch die Magnetflußübergänge der Signale orthogonal quer über alle auf den Magnetstreifen geschriebene Spuren ausgerichtet werden, und bei dem der Verifizierungsschritt umfaßt:
   ii) die Spuren werden mit Hilfe eines über die gesamte mittlere Spur (b) und die Hälfte der kombinierten Breiten der Seitenspuren (a, a') reichenden Lesekopfs (RH) simultan gelesen, wodurch ein resultierendes Signal zur Verfügung gestellt wird, das die Summe der Signale der Spuren ist und dessen Form streng von der gegenseitigen Ausrichtung der aufgezeichneten Signale abhängt und das die Sicherheitsmarkierung bildet.

2. Verfahren nach Anspruch 1, dadurch gekennzeichnet, daß der Verfahrenschritt der Sicherheitsmarkierung von einem Aufnahmemagnetkopf (WH) mit drei Wicklungen (x, y, z) zur Aufzeichnung von zwei Signalen auf drei entsprechende Spuren (a, a', b) durchgeführt wird, wobei ein Signal von den Seitenspuren (a, a') geteilt wird, daß die drei Spuren (a, a', b) magnetisch strikt getrennt aber vollständig benachbart und aneinander anstoßend sind und die gleiche Breite aufweisen, daß die Signale derart aufgezeichnet werden, daß sie auf allen Spuren die Ausrichtung in der Schreiberichtung für Polaritätsumkehrungen beibehalten, und daß der Verfahrensschritt der Verifizierung von dem Lesekopf (RH) mit einer einzigen Wicklung (W) durchgeführt wird, die sich vollständig über die mittlere Spur (b) und über die Hälfte der kombinierten Ausdehnungen der Seitenspuren (a, a') erstreckt, wobei der Lesekopf (RH) ein Signal ausgibt, das die Resultierende der algebraischen Summe der Spuren-Auslesewerte darstellt, deren Markierungsform in strenger Abhängigkeit von der Präzision der Aufzeichnung einen Code zur Erkennung und Gültigmachung darstellt.

3. Verfahren nach einem der vorhergehenden Ansprüche, dadurch gekennzeichnet, daß der Verfahrensschritt der Sicherheitsmarkierung und der Verfahrensschritt der Verifizierung auf den Spuren (a, b, a') des Magnetstreifens durchgeführt werden, wobei der Magnetstreifen von herkömmlicher Art ist, d.h. durch eine Beschichtung von Oxid auf ein übliches Substrat aus Pappe oder dergleichen gebildet wird.

4. Verfahren nach einem der vorhergehenden Ansprüche, dadurch gekennzeichnet, daß die auf den Seitenspuren (a, a') und der mittleren Spur (b) aufgezeichneten Informationen in digitaler Form sind.

5. Verfahren nach einem der vorhergehenden Ansprüche, dadurch gekennzeichnet, daß der Verfahrensschritt der Sicherheitsmarkierung von dem Magnet-Aufzeichnungskopf (WH) durch Erzeugung eines Magnetflusses gleicher Stärke in jeder der Windungen (x, y, z) durchgeführt wird, und daß der bei den Seitenspuren (a, a') während des Verifizierungsschrittes gelesene Fluß konstant und unabhängig von der exakten Zentrierung des Lesekopf (RH) gegenüber dem Magnetstreifen ist.

# Fig. 1

# Fig. 2

# Fig. 3

# Fig. 4